# EUROPÄISCHE PATENTSCHRIFT

(11) **EP 1 329 151 B1**
(45) Veröffentlichungstag und Bekanntmachung des Hinweises auf die Patenterteilung: **24.05.2006**
(21) Anmeldenummer: 03000955.9
(22) Anmeldetag: 16.01.2003
(51) Int. Cl.: A01G 3/053

(54) **Heckenschere**
Hedge trimmer
Taille-haie

(30) Priorität: 16.01.2002 DE 20200630 U
(43) Veröffentlichungstag der Anmeldung: 23.07.2003
(73) Patentinhaber: Thono Beteiligungsgesellschaft mbH, 58302 Herdecke (DE)
(72) Erfinder: Rudolph, Hans-Ulrich, 58313 Herecke (DE)
(74) Vertreter: GROSSE BOCKHORNI SCHUMACHER

(56) Entgegenhaltungen:
- DE-A- 4 020 114
- DE-A- 19 747 629
- FR-A- 2 503 529
- US-A- 3 751 805
- US-A- 4 380 889

## Beschreibung

Die vorliegende Erfindung betrifft eine Heckenschere insbesondere zum Schneiden einer Gartenhecke gemäß Oberbegriff des Anspruches 1, entsprehend dun in DE-A-197 47629 bekannt gewordenen Stand der Technik.

Heckenscheren, sind in ihren Gebrauchswerteigenschaften bestimmt durch die Zielgruppe und das Einsatzgebiet der Geräte und entsprechend ausgelegt. Zunächst wird die Qualität einer Heckenschere durch ihre Antriebsleistung und deren Schneideeigenschaften bestimmt. Wichtige Merkmale sind dabei die Sicherheit, Zuverlässigkeit, die Bedienung, die Vibration des Messers, das Gewicht des Werkzeugs und die Standzeit des Schneidwerkes.

Das Schneidwerk einer Heckenschere wird häufig durch ein Schneid- und ein Fangmesser gebildet, die in der Regel motorisch gegenläufig zueinander angetrieben werden. Schneid- und Fangmesser sind durch Messerleisten gebildet, die jeweils beidseitig V-förmige und seitlich vorspringende Messerklingen mit jeweils zwei V-förmig zusammenlaufenden Schneidkanten aufweisen, die durch schräge Schneidflächen bestimmt sind. Die Anordnung kann hierbei symmetrisch, asymmetrisch oder antisymmetrisch sein. Daneben gibt es aber auch Heckenscheren mit asymmetrischen Messern, bei denen beide Messerleisten auf einer Seite Fangzähne und auf der anderen Seite Schneidzähne haben. Beide Messerleisten werden dann so übereinandergelegt montiert, dass auf jeder Seite je eine Reihe Fang- und Schneidzähne angeordnet sind. Die Fangmesser sind hierbei stumpf ausgebildet und die Fangzähne weisen in der Regel einen Überstand von mindestens 8 mm über die Schneidzähne auf. Die stumpfen Überstände der Fangzähne können hierbei abgerundet, tropfenförmig, pilzförmig oder auch zapfenförmig sein.

Die im Schneidbetrieb gegeneinander gleitenden Schneidmesser fassen das Schnittgut zwischen den Messerklingen, welches dann durch die Schneidkanten getrennt wird. Die verschiedene Anzahl an Messerklingen und deren Abstände, sowie die Länge der Messerleisten bestimmen in Abhängigkeit vom Antrieb den möglichen Einsatz und die Anforderungen für eine Heckenschere. Auch die Eigenschaften des Schneidwerkes, deren Material sowie dessen Vergütung wirken sich entsprechend auf die Schnittleistung und die Standzeit der Schneidkanten aus.

Bei herkömmlichen Heckenscheren sind die Schneidkanten überwiegend keilförmig angeschliffen und verlieren im Gebrauch jedoch nach und nach ihre Schärfe. Ein weiteres Problem besteht darin, dass die Schneidzähne konisch ausgeformt sind, sodass ein Teil des Schneidgutes im Betrieb zur Seite weggedrückt werden kann, bevor es von der Schneide erfasst und geschnitten werden kann. Die Folge sind unsauber geschnittene Heckenflächen, was einen entsprechenden Mehraufwand durch eine umständliche und zeitintensive Nachbearbeitung erfordert. Zwar sind Geräte bekannt, bei denen die Geometrie des Untermessers am Ende tropfenförmig ausgestaltet oder ein asymmetrisches Schneidwerk verwendet wird, um diese Probleme zu vermeiden, was jedoch einen fertigungstechnischen Aufwand ohne Verbesserung der Schnitteigenschaften mit sich bringt. Zudem ist die Fertigung der Obermesser, insbesondere das Einschleifen der Schneidengeometrie technisch relativ aufwendig. Daher können stumpfe Schneidmesser ohne spezifische technische Ausrüstungen nicht in guter Qualität nachgeschliffen werden. Dadurch verringert sich aufgrund Abstumpfens der Schneidkanten die Schnittleistung des Gerätes.

Aufgabe der Erfindung ist es, eine Verbesserung der Schneidergebnisse durch eine Schneidgeometrie mit höherem Wirkungsgrad vorzusehen und damit die Standzeiten der Messer zu verlängern. Nach einem weiteren Aspekt soll jegliches Nachschleifen der Schneidkanten entfallen können.

Diese Aufgabe wird erfindungsgemäß bei einer Heckenschere, insbesondere einer motorisch betriebenen Heckenschere mit mindestens zwei gegenläufig beweglichen Messerleisten, von denen jede eine Anzahl von zueinander beabstandeten Messerklingen mit durch Schneideflächen begrenzten Schneidkanten aufweist, dadurch gelöst, dass mindestens ein Teil, vorzugsweise jedoch alle Schneidkanten eine Verzahnung aufweisen. Diese kann auf oder an der Schneidkante bereichsweise vorgesehen sein, ist jedoch bevorzugt i. w. längs der gesamten Schneidkante ausgebildet.

Vorzugsweise weist die erfindungsgemäßen Heckenschere an der Schneidkante der Schneidfläche einen Schneidwinkel auf, der von der Oberfläche der Messerleiste nach außen laufend keilförmig abgeschrägt ist, wobei der Schneidwinkel im Bereich von 30 bis 50°, bevorzugt 45° ausgebildet ist.

In der Regel weist die Auszackung des Profils der Schneidkante mindestens einen ersten Flankenwinkel auf, wobei der Flankenwinkel im Bereich von 90 bis 120° ausgebildet ist.

Weiterhin können die Messerklingen der Messerleiste in symmetrischer, asymmetrischer oder antisymmetrischer Anordnung ausgebildet sein. Möglich ist die Ausbildung der Schneidkanten mit Verzahnung nur auf einer Messerleiste, insbesondere am Obermesser, zweckmäßigerweise sind jedoch alle Messerleisten an ihren Schneidkanten verzahnt bzw. mit einer entsprechenden Verzahnung versehen.

Bevorzugt beträgt der Neigungswinkel der Schneidflächen zum Lot zur Mitte der Messerleiste 22 bis 26°.

Nachfolgend wird ein bevorzugtes Ausführungsbeispiel der Erfindung anhand der Zeichnung beschrieben. Darin zeigen rein schematisch
- Figur 1:: eine Draufsicht einer Messerleiste einer Heckenschere,
- Figur 2:: eine Detailansicht einer Schneidkantenverzahnung,
- Figur 3:: eine Seitenansicht der Schneidkantenverzahnung von Figur 1.

Motorisch betriebene Heckenscheren weisen üblicherweise zwei übereinander angeordnete Messerleisten auf, die beidseitig mit V-förmigen zahnartigen Messerklingen versehen sind.

Diese Messerleisten werden motorisch relativ zueinander angetrieben bzw. bewegt, um das Schneidgut, also Äste, Hecken und dgl., zu schneiden. Hierbei unterscheidet man zumeist zwischen asymmetrischen und symmetrischen Anordnungen der Messerleisten. Bei der asymmetrischen Anordnung weist eine Messerleiste auf einer Seite stumpf ausgebildete Fangzähne auf und auf der anderen Schneidzähne, die kürzer ausgebildet sind als die Fangzähne. Auch bei der zweiten Messerleiste sind die Fangzähne auf der einen und die Schneidzähne auf der anderen angeordnet. Die beiden Messerleisten sind dann in der Heckenschere so angeordnet, dass die auf einer Seite angeordneten Fangzähne der einen Messerleiste mit den auf der anderen Messerleiste angeordneten Schneidzähnen korrespondieren, also zusammenarbeiten. Daneben gibt es aber auch die symmetrischen Heckenscheren, bei denen eine Messerleiste die Schneidzähne auf beiden Seiten und die andere Messerleiste die Fangzähne auf beiden Seiten aufweist. Nach Maßgabe der Erfindung können alle diese Messerleisten gestaltet werden, wobei die erfindungsgemäße Ausgestaltung sowohl auf den Fangzähne wie auf den Schneidzähne Anwendung finden kann. Sie kann auch nur auf einen Teil der Zähne Anwendung finden, wie im Folgenden noch erläutert wird.

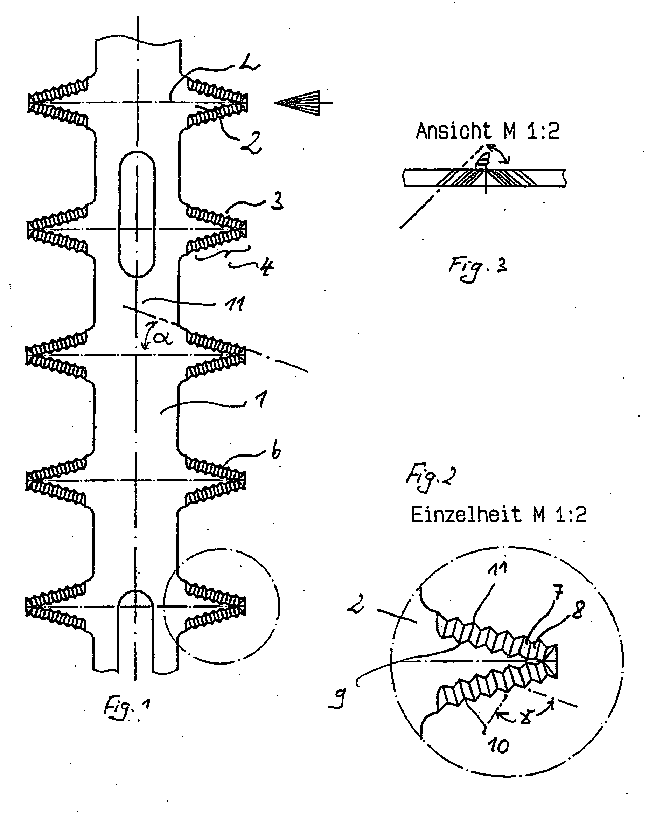

Die bei der erfindungsgemäßen Heckenschere gemäß Figur 1 zur Anwendung kommende Messerleiste 1 weist links und rechts von der Mitte der Messerleiste aus gesehen vorzugsweise V-förmige zahnartige Messerklingen 2 auf. Hierbei sind die Messerklingen 2 äquidistant angeordnet und auf beiden Seiten spiegelsymmetrisch gegenüberliegend und nach außen hin vorstehend ausgebildet, was jedoch nur beispielhaft und nicht zwingend ist. Je nach Schnittgeschwindigkeit und zu schneidendem Schnittgut ist eine bestimmte Beabstandung aufeinanderfolgender Messerklingen 2 in geeigneter Weise vorgesehen. So kann die Größe der Messerklingen 2 durch die nach außen hervorstehende Länge der beidseitig angeordneten Schneidkanten 3 der Messerklingen wie auch der Neigungswinkel α von dem Lot L zur Mitte M der Messerleiste beispielsweise 22 bis 26° betragen aber auch variiert werden. Gegebenenfalls könnte eine Scheidkante 3 auch polygonal ausgestaltet sein. Im vorliegenden Beispiel sind die beiden um das Lot L zur Mittelinie M der Messerleiste 1 angeordnete Schneidflächen 4 symmetrisch ausgebildet. Es versteht sich, dass neben dem hier beispielhaft skizzierten trapezförmigen Profilverlauf der Messerklingen 2 auch andere Verlaufsformen, zum Beispiel mit Radien, sinusförmige Ausbildungen, aber auch andere Wellenformen möglich sind. Dies trifft auch für den Verlauf der Schneidkanten zu. Die Schneidfläche 4 einer Messerklinge 2 weist eine Abschrägung auf, die von der Oberfläche der Messerleiste schräg in Richtung der Unterseite der Messerleiste 1 verläuft und dort den Winkel β einschließt (siehe schematisch in Figur 3). Auf dieser schräg zur Unterseite der Messerleiste 1 verlaufenden Schneidfläche 4 ist eine Verzahnung 6 eingeprägt, die in Figur 2 vergrößert dargestellt ist. Dies kann durch Walzen oder Einschleifen, gegebenenfalls auch durch einen Fräsvorgang oder Schneid- sowie Prägevorgang erfolgen, wodurch etwa zahnartige Riefen eingebracht werden, die diese Verzahnung auf den Schneidkanten ausbilden.

Gemäß Figur 2, die einen einzelnen Schneidzahn bzw. Messerklinge 2 zeigt, handelt es sich dabei um eine Art Schrägverzahnung. Für die Oberseite der Messerleiste 1 ist zwischen zwei Flanken 7, 8 ein erster Flankenwinkel 9 definiert, der von einem für die Unterseite der Messerleiste 1 definierten zweiten Flankenwinkel 10 abweichen kann.

Figur 3 zeigt eine Seitenansicht der Messerleiste 1 in Richtung auf den Schneidzahn 2, wobei beispielhaft davon ausgegangen wurde, dass die Dicke der Messerleiste 1, d. h. die über die Schneidflächen 4 des Schneidzahns 2 verlaufende Schneidfläche konstant gehalten ist. Es versteht sich jedoch, dass die Dicke der Messerleiste 1 über die Schnittfläche 4 auch variiert oder nach außen hin einseitig, zweiseitig oder wellenförmig abgeschrägt sein kann. Auch die Schneidkante 3 kann entsprechend ausgestaltet sein. Da nun die Schneidkanten 3 der Messerleiste 1 dahingehend verändert wurden, dass die Schneidkante 3 als einzelne Messerklinge nicht mehr glatt angeschliffen wird, ist die Grundform der Schneidkante 3 nunmehr in einer Anzahl von spitzen Zähnen 7, 8 ausgeformt, die die Verzahnung 6 ergeben. Durch die erfindungsgemäße Neigung β der Schneidfläche 4 ergibt sich vorteilhaft eine Keilwirkung, die für die Schneidwirkung sehr günstig ist. Durch die erfindungsgemäße Gestaltung der Schneidfläche als profilierte Zahnung 7, 8 mit V-förmigen, aber oben spitz zulaufenden Zähnen, erhöht sich durch den Oberflächengewinn die als tatsächlich zur Verfügung stehende Schneidfläche 4 bei gleichbleibenden Außenmaßen beispielsweise auf das Doppelte der Schneidzähne 2, was gleichfalls die Schnittleistung maximiert. Im dargestellten Ausführungsbeispiel ist die Verzahnung von der Spitze aus im wesentlichen über die gesamte Schneidkante vorgesehen, wobei jedoch auch eine bereichsweise Ausbildung der Verzahnung etwa im Bereich der Spitze oder im mittleren Kantenbereich geeignet ist.

In Abhängigkeit des Schneidguts, insbesondere der Holzart, aber auch dem Anwendungsfall, etwa ob dünnere oder stärkere Äste geschnitten werden sollen, kann die Verzahnung 6 entsprechend angepasst werden. Dies erfolgt insbesondere dadurch, dass je Schneidkante die Anzahl der spitzen Zähne 7, 8 variiert wird. Je dünner das Schneidgut ist, desto mehr eignet sich ein Messer mit einer feineren Verzahnung, bei der also je Schneidkante bzw. Schneidfläche mehr Riefen eingearbeitet sind und damit mehr Zähne 7, 8 ausgebildet sind. Aus diesem Grund werden die Messerleisten praxisgerecht mit unterschiedlich grober oder feiner Verzahnungsstruktur hergestellt, was dem jeweiligen Anwendungsfall vorbehalten bleibt.

Im Schneidbetrieb dringen zunächst die Spitzen 11 der Zähne 2, also die Spitzen der durch die Verzahnung zackig geformten Schneidkanten, in das Schneidgut ein, was den Vorteil hat, dass bedingt durch die Anzahl der Zahnspitzen 11 das Schneidgut nicht mehr weggedrückt wird. Weiter erfolgt der Schnitt über die Zahnflanken 7, 8 der einzelnen Zähne 2. Durch die damit erfindungsgemäß unterbrochene Schneidengeometrie und durch die scharfen Kanten der Zahnung 7,8 wird das Eindringen und Schneiden in seinem Wirkungsgrad erhöht und entspricht einem ständig neuen Einreißen und Anschnitt beim Trennen des Schneidgutes.

Überraschend wurde herausgefunden, dass zugleich die Standzeit des Messers durch die erfindungsgemäße Verzahnung der Schneidkante 3 verbessert wird. Damit kann das unvermeidliche Abstumpfen, wie dies bei geschliffenen Schneidkanten der Fall ist, bei der erfindungsgemäßen Geometrie nicht mehr eintreten. Selbst wenn sich das Werkstoffinaterial aus dem die Messerleiste nach bekannten Verfahren gefertigt ist, in seinen Ausmaßen durch Materialabtragung und Verschleiß verringert, bleibt eine gleichbleibende Schärfe der Schneiden garantiert. Insbesondere bleibt die erfindungsgemäße Verzahnung auch bei Verschleiß bestehen, wobei sich das Messer somit sozusagen selbst nachschärft. Somit erhöht sich die Standzeit und auch der Gebrauchswert einer Heckenschere an sich durch die erfindungsgemäße Verzahnung der Schneidflächen erheblich.

## Patentansprüche

1. Heckenschere, insbesondere motorisch betriebene Heckenschere, mit mindestens zwei gegenläufig beweglichen Messerleisten (1) zum Greifen und zum Schneiden, wobei mindestens eine Messerleiste (1) auf mindestens einer Seite voneinander beabstandete Messerklingen (2) mit durch Schneidflächen (4) begrenzten Schneidkanten (3) aufweist, **dadurch gekennzeichnet, dass** Schneidkanten (3) und Schneidflächen (4) mindestens teilweise eine Verzahnung (6) aufweisen.

2. Heckenschere nach Anspruch 1, **dadurch gekennzeichnet, dass** die Schneidkante (4) der Schneidefläche (5) einen Schneidwinkel (β) aufweist, der von der Oberfläche der Messerleiste nach außen laufend keilförmig abgeschrägt ist, wobei der Schneidwinkel insbesondere im Bereich von 30-50°, bevorzugt 45°, ausgebildet ist.

3. Heckenschere nach Anspruch 1 oder 2, **dadurch gekennzeichnet, dass** die Auszackung des Profils der Schneidkante (4) mindestens einen Flankenwinkel (x) aufweist, der im Bereich von 90-140°, insbesondere 90-120° ausgebildet ist.

4. Heckenschere nach einem der Ansprüche 1 bis 3, **dadurch gekennzeichnet, dass** von der Mitte nach außen zeigende gegenüberliegende Schneidezähne (2) der Messerleiste (1) in symmetrischer, asymmetrischer oder antisymmetrischer Anordnung ausgebildet sind.

5. Heckenschere nach Anspruch 4, **dadurch gekennzeichnet, dass** der Neigungswinkel (α) der Schneidflächen (4) zum Lot (L) zur Mitte (11) der Messerleiste (1) 20-30° bevorzugt 22-26° beträgt.

6. Heckenschere nach einem der vorhergehenden Ansprüche, **dadurch gekennzeichnet, dass** die Messerklingen seitlich nach außen vorstehen und zwei schräg zueinander verlaufende Schneidkanten aufweisen, an bzw. auf denen die Verzahnung vorgesehen ist.

7. Heckenschere nach einem der vorhergehenden Ansprüche, **dadurch gekennzeichnet, dass** die Verzahnung (6) bereichsweise oder über die gesamte Länge der Schneidkante (4) vorgesehen ist.

8. Heckenschere nach einem der vorhergehenden Ansprüche, **dadurch gekennzeichnet, dass** die Anzahl der Zähne der Verzahnung (6) auf einer Schneidkante in Abhängigkeit des Schneidgutes gewählt ist, wobei vorzugsweise für dünneres Schneidgut Schneidkanten mit einer größeren Anzahl von Zähnen (7, 8) der Verzahnung (6) verwendet sind.

## Claims

1. A set of hedge clippers, in particular motor-driven hedge clippers, comprising at least two knife strips (1) that move in opposite directions, said knife strips being intended for gripping and cutting, at least one knife strip (1) having knife blades (2) that are spaced apart from one another on at least one side, said knife blades having cutting edges (3) that are delimited by cutting surfaces (4), **characterised in that** said cutting edges (3) and cutting surfaces (4) include a set of teeth (6) at least in part.

2. The set of hedge clippers in accordance with claim 1, **characterised in that** said cutting edge (3) of said cutting surface (4) has a cutting angle (β) that slants from the surface of the knife strip in an outwardly tapering manner, said cutting angle being formed in particular in the range of 30-50°, preferably 45°.

3. The set of hedge clippers in accordance with claim 1 or 2, **characterised in that** the serration of the profile of said cutting edge (3) has at least one flank angle (χ) formed in the range of 90-140°, in particular 90-120°.

4. The set of hedge clippers in accordance with any one of claims 1 to 3, **characterised in that** opposite cutting teeth (2) of said knife strip (1) are designed to have a symmetrical, asymmetrical or anti-symmetrical configuration, said cutting teeth pointing outwards from the centre.

5. The set of hedge clippers in accordance with claim 4, **characterised in that** the angle of inclination (α) of said cutting surfaces (4) relative to the perpendicular (L) in relation to the centre (11) of said knife strip (1) is 20-30°, preferably 22-26°.

6. The set of hedge clippers in accordance with any one of the preceding claims, **characterised in that** said knife blades project laterally outwards and comprise two cutting edges that slant towards one another, said set of teeth being provided at or on said cutting edges.

7. The set of hedge clippers in accordance with any one of the preceding claims, **characterised in that** said set of teeth (6) is provided sectionally or across the entire length of said cutting edge (3).

8. The set of hedge clippers in accordance with any one of the preceding claims, **characterised in that** the number of teeth in said set of teeth (6) on a cutting edge is chosen such as to be determined by the material to be cut, cutting edges that have a larger number of teeth (7, 8) in said set of teeth (6) being preferably used for any thinner material which is to be cut.

## Revendications

1. Taille-haie, en particulier taille-haie motorisé, avec au moins deux barres de coupe (1) à marche opposée pour saisir et couper, dans lequel au moins une barre de coupe (1) présente, sur au moins un côté, des lames de coupe (2) espacées les unes des autres, avec des arêtes de coupe (3) délimitées par des surfaces de coupe (4), **caractérisé en ce que** les arêtes de coupe (3) et les surfaces de coupe (4) présentent au moins en partie une denture (6).

2. Taille-haie selon la revendication 1, **caractérisé en ce que** l'arête de coupe (3) de la surface de coupe (4) présente un angle de coupe (ß) incliné en forme de coin, s'étendant depuis la surface de la barre de coupe vers l'extérieur, dans lequel l'angle de coupe est en particulier dans la gamme de 30° à 50°, de préférence de 45°.

3. Taille-haie selon la revendication 1 ou 2, **caractérisé en ce que** la dentelure du profil de l'arête de coupe (3) présente au moins un angle de flanc (x), qui est dans la gamme de 90° à 140°, en particulier de 90° à 120°.

4. Taille-haie selon l'une quelconque des revendications 1 à 3, **caractérisé en ce que** des dents de coupe (2) opposées, partant du centre vers l'extérieur, de la barre de coupe (1) sont réalisées selon une disposition symétrique, asymétrique ou antisymétrique.

5. Taille-haie selon la revendication 4, **caractérisé en ce que** l'angle d'inclinaison (α) des surfaces de coupe (4) par rapport à la perpendiculaire (L) sur l'axe central (11) de la barre de coupe (1) va de 20° à 30°, de préférence de 22° à 26°.

6. Taille-haie selon l'une quelconque des revendications précédentes, **caractérisé en ce que** les lames de coupe dépassent latéralement vers l'extérieur et présentent deux arêtes de coupe s'étendant obliquement l'une par rapport à l'autre, au niveau desquelles ou sur lesquelles est prévue la denture.

7. Taille-haie selon l'une quelconque des revendications précédentes, **caractérisé en ce que** la denture (6) est prévue sur certaines parties ou sur toute la longueur de l'arête de coupe (3).

8. Taille-haie selon l'une quelconque des revendications précédentes, **caractérisé en ce que** le nombre de dents de la denture (6) sur une arête de coupe est choisi en fonction de l'objet à couper, dans lequel des arêtes de coupe avec un grand nombre de dents (7, 8) de la denture (6) sont de préférence utilisées pour des objets à couper peu épais.
